(19) Europäisches Patentamt
European Patent Office
Office européen des brevets

(11) EP 1 764 977 A2

(12) **EUROPEAN PATENT APPLICATION**

(43) Date of publication:
**21.03.2007 Bulletin 2007/12**

(51) Int Cl.:
***H04L 29/06*** *(2006.01)*

(21) Application number: **06119136.7**

(22) Date of filing: **18.08.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **16.09.2005 KR 20050086929**

(71) Applicant: **Samsung Electronics Co., Ltd.**
**Suwon-si, Gyeonggi-Do (KR)**

(72) Inventors:
- **Kim, Yong-suk**
  **Daejeon (KR)**
- **Chung, Chang-mo**
  **Dormitory of Samsung Advanced**
  **Gyeonggi-do (KR)**

(74) Representative: **Grünecker, Kinkeldey, Stockmair & Schwanhäusser**
**Anwaltssozietät**
**Maximilianstrasse 58**
**80538 München (DE)**

(54) **Method and system for distance-based associations in a network**

(57) An association method and system in a network system are provided. The association method is for data exchange between a host and a device in a network system, and includes measuring a distance between the device and the host, and transmitting a connection context required for association with the device if the distance is smaller than a threshold. According to the association method, since a series of processes for the association of the device with the host is performed intuitively, the a user's convenience in using the device can be maximized.

FIG. 3A

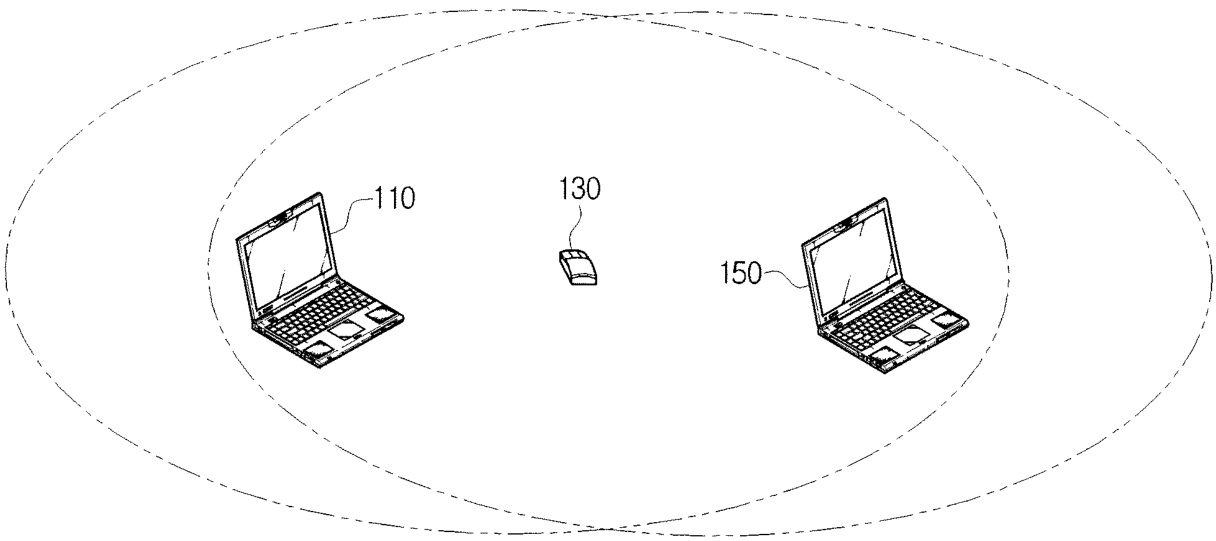


EP 1 764 977 A2

**Description**

## BACKGROUND OF THE INVENTION

### Field of the Invention

Apparatuses and methods consistent with the present invention relate to an association method and system in a network system, and more particularly, to an association method and system in a network system through a distance measurement.

### Description of the Related Art

FIG. 1 is a view illustrating a related art network system. Referring to FIG. 1, the related art network system includes a host 10 and a device 20. For data exchange, the device 20 performs an association with the host 10 using a wireless USB method. Here, the term "association" means a setup of an initial connection between the device 20 and the host 10. For this association, it is necessary to exchange a key between the device 20 and the host 10.
The key may be a fixed symmetric key (FSK) or a public key. After this key exchange process, the host 10 transmits information (i.e., connection context) to the device 20.
The connection context includes all things to be initially set up for communication security, and exists independently between the host 10 and a device 20. The connection context is always created by the host and transmitted to the device 20. The connection context typically includes a connection host ID of 128 bits, a connection device ID of 128 bits, and a connection key of 128 bits.
When the transmission of the connection context is completed, a security process is performed.
However, under the related art association method in a network system, wireless communication environments are vulnerable to external security attacks.
FIG. 2 is a view illustrating another related art network system.
Referring to FIG. 2, the related art network system includes a host 10, a device 20, and an USB device 30. If the user desires to connect to the host 10 of the device 20, the user first connects the USB device 30 to a USB port of the host 10. Then, the user extracts the USB device 30 from the USB port of the host 10, and presses a button on the USB device 30 in a state that makes the USB device 30 point to an infrared (IR) port of the device 20. Accordingly, the corresponding device 20 is then in association with the host 10, and performs its normal operation.
However, in the case of the related art network system as illustrated in FIG. 2, the user must insert/extract the USB device 30 into/from the host 10 and then press the button on the USB device 30 in a state that makes the USB device point to the IR port of the device 20. This causes inconvenience to the user.
Accordingly, a scheme is required for performing a series of processes for association with the host of the device on the network more intuitively.

## SUMMARY OF THE INVENTION

The present invention provides an association method and system in a network system through a distance measurement.
According to an aspect of the present invention, there is provided an association method for data exchange between a host and a device in a network system, according to an exemplary embodiment of the present invention, which comprises measuring a distance between the device and the host; and transmitting a connection context required for association with the device if the distance is smaller than a threshold.
The association method may further comprise displaying a user's selection of whether to request the association if the distance is smaller than the threshold.
The association method may further comprise receiving a secret information transfer key from the device if a signal requesting association with the host is input to the device.
The secret information transfer key may be either an FSK or a public key.
The distance may be measured using characteristic information of a wireless signal.
The characteristic information may be any one or a combination of at least two of a received signal strength indicator (RSSI), a link quality indicator (LQI), and a packet error rate (PER).
According to another aspect of the present invention, there is provided a host for association for data exchange with a device in a network, which comprises a measurement unit which measures a distance between the device and the host; and a transmitting/receiving unit which transmits connection context required for the association with the device if the measured distance is smaller than a threshold.
The transmitting/receiving unit may transmit a signal for displaying a user's selection of whether to request the association on the device if the distance is smaller than the threshold.

The transmitting/receiving unit may receive a key from the device if a signal requesting association with the host is input to the device.

The key may be a key required for transferring secret information, and may be either an FSK or a public key.

The measurement unit may measure the distance using characteristic information of a wireless signal.

The characteristic information may be any one or a combination of at least two of an RSSI, an LQI, and a PER.

According to still another aspect of the present invention, there is provided an association method for data exchange that uses a introducer for association between a host and a device in a network system, which comprises measuring a distance between the device and the introducer; transmitting a signal requesting a key to the device if the distance is smaller than a threshold; receiving the key from the device; measuring a distance between the host and the introducer; and transmitting to the host the key for making the host transmit a connection context to the device.

The association method may further comprise displaying a user's selection of whether to request the association if the distance between the device and the introducer is smaller than the threshold.

The signal requesting the key may be transmitted when a signal requesting the association is input.

The association method may further comprise displaying a user's selection of whether to request the association if the distance between the host and the introducer is smaller than the threshold.

In the operation of transmitting the key to the host, the key may be transmitted to the host when the signal requesting the association is input.

The key may be a key required for transferring secret information, and may be either an FSK or a public key.

The distances may be measured using characteristic information of a wireless signal.

The characteristic information may be any one or a combination of at least two of a an RSSI, LQI), and a PER.

The introducer may be a mobile phone.

In still another aspect of the present invention, there is provided an introducer for use in association between a host and a device in a network system, which comprises a measurement unit which measures a distance between the device and the introducer and a distance between the host and the introducer; and a transmitting/receiving unit for transmitting a signal requesting a key to the device and receiving the key from the device if the distance between the device and the introducer is smaller than a threshold, while transmitting the key to the host if the distance between the host and the introducer is smaller than the threshold.

The introducer may further comprise a display unit for displaying a user's selection of whether to request the association if the distance between the device and the introducer is smaller than the threshold.

The signal requesting the key may be transmitted when a signal requesting the association is input.

The introducer may further comprise a display unit for displaying a user's selection of whether to request the association if the distance between the host and the introducer is smaller than the threshold.

The transmitting/receiving unit may transmit the key to the host when the signal requesting the association is input.

The key may be a key required for transferring secret information, and may be either an FSK or a public key.

The measurement unit may measure the distances using characteristic information of a wireless signal.

The characteristic information may be any one or a combination of at least two of an RSSI, an LQI), and a PER.

The measurement unit may operate when an operation start signal is input.

In still another aspect of the present invention, there is provided a network system including a device and a host, which comprises an introducer which measures a distance between the device and the introducer and transmits a signal requesting a key to the device if the distance between the device and the introducer is smaller than a threshold, while measuring a distance between the host and the introducer and transmitting the key to the host if the distance between the host and the introducer is smaller than the threshold, wherein the device transmits the key when the signal requesting the key is received from the introducer, and wherein the host transmits a connection context to the introducer when the key is received from the introducer.

The introducer may display a user's selection of whether to request the association if the distance between the device and the introducer is smaller than the threshold.

The introducer may transmit the signal for requesting the key to the device when a signal for requesting the association is input.

The introducer may display a user's selection of whether to request the association if the distance between the host and the introducer is smaller than the threshold.

The introducer may transmit the key to the host when the signal requesting the association is input.

The key may be a key required for transferring secret information, and may be either an FSK or a public key.

The introducer may measure the distances using characteristic information of a wireless signal.

The characteristic information may be any one or a combination of at least two of an RSSI, an LQI, and a PER.

The introducer may be a mobile phone.

## BRIEF DESCRIPTION OF THE DRAWINGS

The above and other aspects of the present invention will be more apparent by describing exemplary embodiments of the present invention with reference to the accompanying drawings, in which:
FIG. 1 is a view illustrating a related art network system;
FIG. 2 is a view illustrating another related art network system;
FIG. 3A is a view illustrating a network system in the case where a device is movable according to the present invention;
FIG. 3B is a signal flowchart illustrating an association method in a network system in the case where a device is movable according to the present invention;
FIG. 4 is a view explaining the principle of a method for measuring a distance between a host and a device on a network according to the present invention;
FIG. 5A is a view illustrating a network system in the case where a device is immovable according to the present invention;
FIG. 5B is a signal flowchart illustrating an association method in a network system in the case where a device is immovable according to the present invention; and
FIG. 6 is a flowchart illustrating an association method in the case where a movable device is used as an introducer according to the present invention.

## DETAILED DESCRIPTION OF THE EXEMPLARY EMBODIMENTS

exemplary embodiments of the present invention will be described in greater detail with reference to the accompanying drawings.
In the following description, the same drawing reference numerals are used for the same elements even in different drawings. The matters defined in the description such as a detailed construction and elements are only provided to assist in a comprehensive understanding of the invention. Thus, it is apparent that the present invention can be carried out without those defined matters. Also, well-known functions or constructions are not described in detail since they would obscure the invention in unnecessary detail.
In the present invention, a device that performs an association with a host in a network may be classified as a movable device or an immovable device.
FIG. 3A is a view illustrating a network system in the case where a device is movable according to the present invention.
Referring to FIG. 3A, a network system according to the present invention includes a first host 110, a second host 150, and a mobile device 130. The mobile device 130 is first in association with the second host 150, and may be changed to be in association with the first host 110 if needed by a user.
FIG. 3B is a signal flowchart illustrating an association method in a network system in the case where a device is movable according to the present invention.
Referring to FIGs. 3A and 3B, when the mobile device 130 accesses the first host 110, the first host 110 measures the distance between the device 130 and the first host 110 (S200).
If the distance measured by the first host 110 is smaller than a threshold, the first host 110 transmits a signal requesting whether the user intends to perform the association to the mobile device 130 (S210).
Here, the threshold can be properly determined according to a communication environment. In the exemplary embodiment of the present invention, it is set to about 0-5 cm.
In the exemplary embodiment of the present invention, operation S200 may be performed by the mobile device, and in this case, operation S210 is not required to be performed.
Meanwhile, the mobile device 130, which has received a signal requesting confirmation of the association intention from the first host 110, displays an inquiry about whether the user will request the association with the first host 100 on a display unit of the mobile device 130.
If the user requests the association with the first host 100 by pressing a button on the mobile device 130, the mobile device 130 receives an input of the association request signal, and confirms the user's intention of association with the first host 110 (S220).
Then, the mobile device 130 transmits a key to the first host (S230). Here, the key is a key required for transferring secret information, and in the exemplary embodiment of the present invention, it may be a fixed symmetric key (FSK) or a public key.
If the first host 110 receives the key, it transmits a connection context to the mobile device 130 (S240).
On the other hand, in order for the first host to measure the distance between the device and the first host in operation S200, it should be provided with a measurement unit. Hereinafter, a distance measuring method will be explained.

FIG. 4 is a view explaining the principle of a method for measuring a distance between a host and a device on a network according to the present invention.

Referring to FIG. 4, the node between node 1 that corresponds to the first host and node 2 that corresponds to the second host may be measured by Equation (1)

$$t_1 = t_0 + \tau + \Delta + \tau \quad \ldots\ldots (1)$$

In Equation (1), to denotes the time when a signal is transmitted from node 1, $t_1$ denotes the time when a response signal is received from node 2 in response to the signal transmitted from node 1, τ denotes time required to transmit the signal from node 1 to node 2, and Δ denotes a process time at node 2. Equation (2) is obtained by regulating Equation (1) for τ.

$$\tau = (t_1 - t_2 - \Delta)/2 \quad \ldots\ldots (2)$$

By substituting τ obtained through Equation (2) in Equation (3), the distance between the first host 110 and the mobile device 130 can be obtained as in Equation (3).

$$d = c \times \tau, \quad c : Celerity = 3 \times 10^8 m/\sec \quad \ldots\ldots (3)$$

In Equation (3), c denotes a transmission speed between node 1 and node 2, and through Equation (3), the first host 110 can calculate the distance.

In the exemplary embodiment of the present invention, the distance may be calculated by such a direct method, or may be measured using characteristic information of a wireless signal. As the characteristic information, the RSSI, the LQI, and the PER may be used. In the exemplary embodiment of the present invention, a combination of at least two of RSSI, LQI and PER may also be used.

Hereinafter, a case where a device that is in association with a host in a network is immovable will be explained.

FIG. 5A is a view illustrating a network system in the case where a device is immovable according to the present invention. The network system as illustrated in FIG. 5A includes a host 310, a device 350, and an introducer 330. Here, the introducer 330 may be a mobile phone which is carried by a general user and moves between the device 350 and the host 310.

FIG. 5B is a signal flowchart illustrating an association method in a network system in the case where a device is immovable according to the present invention.

As the introducer 330 moves to the device 350, it measures the distance between the device 350 and the introducer 330 (S400). For this, the introducer 330 should be provided with a measurement unit. In the exemplary embodiment of the present invention, if the introducer 330 functions as a mobile phone, it is preferable that the corresponding measurement unit starts its operation when a distance measurement start signal is input from the user to the introducer 330.

If the measured distance is smaller than a threshold, the introducer 330 displays an inquiry about whether the user will select to request the association on a display unit of the introducer 330.

In the exemplary embodiment of the present invention, the distance measurement in operation S400 may be performed by the device 350. In this case, the device 350 transmits a signal requesting confirmation of the user's intention of association to the introducer 330, and the introducer 330 displays an inquiry about whether the user will request the association on the display unit of the introducer 330.

Here, the measurement of the distance and the setting of the threshold are the same as described above.

Then, if the user inputs the association request signal to the introducer 330 by pressing a button on the introducer 330, the introducer 330 transmits a signal requesting a key to the device 350 (S410).

The device 350, which has received the key request signal from the introducer 330, transmits the corresponding key to the introducer 330 (S420). Here, the key may be a FSK or a public key as described above.

Then, as the introducer 330 moves to the host 310, it measures the distance between the host 310 and the introducer 330 (S430).

If the measured distance is smaller than a threshold, the introducer 330 displays an inquiry about whether the user will select to request the association on the display unit of the introducer 330.

In the exemplary embodiment of the present invention, the distance measurement in operation S430 may be performed by the host 310. In this case, the host 310 transmits a signal requesting confirmation of the user's intention of association to the introducer 330, and the introducer 330 displays an inquiry about whether the user will request the association on the display unit of the introducer 330.

Here, the measurement of the distance and the setting of the threshold are the same as described above.

Then, if the user inputs the association request signal to the introducer 330 by pressing a button on the introducer 330, the introducer 330 transmits the key to the host 310 (S440). Accordingly, the host 310 transmits a connection context to the device 350, and thus the association of the device 350 with the host 310 is completed.

On the other hand, in the exemplary embodiment of the present invention, the movable device as illustrated in FIG. 3A may be used as the introducer as in FIG. 5A.

FIG. 6 is a flowchart illustrating an association method in the case where a movable device is used as an introducer according to the present invention.

Referring to FIG. 6, the user first determines the use of the corresponding device. If the user determines the use of the corresponding device (e.g., whether to user the corresponding device as an introducer) by pressing a corresponding button provided on the device, the corresponding device receives the corresponding signal (S500).

Then, the corresponding device confirms whether its use is determined as the introducer, i.e., whether it is designated as the introducer (S505). If it is not designated as the introducer, the corresponding device confirms whether the RSSI exceeds the threshold as it moves to the host (S510).

If the RSSI does not exceed the threshold, the corresponding device repeats operation S510, while if the RSSI exceeds the threshold, it operates the display unit so as to lead the user to select whether to request the association (S515).

If the user does not press an association request button of the corresponding device for a predetermined time or presses an association rejection button, the corresponding device repeats operation S510, while if the user presses the association request button of the device, it transmits the FSK to the host (S525) and receives the connection context from the host to complete the association (S530).

On the other hand, if the user has designated the corresponding device as the introducer, the corresponding device (i.e., the introducer) confirms whether the RSSI exceeds the threshold as it moves to a device of which the association with the host is required (S535).

If the RSSI does not exceed the threshold, the introducer repeats operation S535, while if the RSSI exceeds the threshold, it operates the display unit so as to lead the user to select whether to request the association (S540).

If the user does not press the association request button of the introducer or presses the association rejection button, the corresponding device repeats operation S535, while if the user presses the association request button of the device, it transmits an FSK request signal to the device. Accordingly, the introducer receives the FSK from the device (S550).

Thereafter, the introducer confirms whether the RSSI exceeds the threshold as it moves to the host (S555).

If the RSSI does not exceed the threshold, the introducer repeats the performing of operation S555, while if the RSSI exceeds the threshold, it operates the display unit so as to lead the user to select whether to request the association (S560).

If the user does not press the association request button of the introducer for a predetermined time or presses the association rejection button, the introducer repeats operation S555, while if the user presses the association request button of the introducer, it transmits the FSK to the host (S570). As a result, the device of which the association with the host can receive the connection context from the host to complete the association (S575).

As described above, according to the present invention, since a series of processes for the association of the device with the host is performed intuitively, the user's convenience in use can be maximized.

The foregoing embodiments and advantages are merely exemplary and are not to be construed as limiting the present invention. The present teaching can be readily applied to other types of apparatuses. Also, the description of the embodiments of the present invention is intended to be illustrative, and not to limit the scope of the claims, and many alternatives, modifications, and variations will be apparent to those skilled in the art.

## Claims

1. An association method for data exchange between a host and a device in a network system, the method comprising:

   measuring a distance between the device and the host; and
   transmitting a connection context required for association with the device if the distance is smaller than a threshold.

2. The method of claim 1, further comprising displaying a user's selection of whether to request the association if the distance is smaller than the threshold.

3. The method of claim 2, further comprising receiving a secret information transfer key from the device if a signal requesting association with the host is input to the device.

4. The method of claim 3, wherein the secret information transfer key is a fixed symmetric key or a public key.

5. The method of claim 1, wherein the distance is measured using characteristic information of a wireless signal.

6. The method of claim 5, wherein the characteristic information comprises at least one of a received signal strength indicator, a link quality indicator, and a packet error rate.

7. The method of claim 1, wherein the operation of measuring a distance between the device and the host is made by at least one of the host and the device.

8. A host for association for data exchange with a device in a network system, the host comprising:

a measurement unit which measures a distance between the device and the host; and
a transmitting and receiving unit which transmits connection context required for the association with the device if the measured distance is smaller than a threshold.

9. The host of claim 8, wherein the transmitting and receiving unit transmits a signal for displaying a user's selection of whether to request the association on the device if the distance is smaller than the threshold.

10. The host of claim 9, wherein the transmitting and receiving unit receives a key from the device if a signal requesting association with the host is input to the device.

11. The host of claim 10, wherein the key is a key required for transferring secret information, and is a fixed symmetric key or a public key.

12. The host of claim 8, wherein the measurement unit measures the distance using characteristic information of a wireless signal.

13. The host of claim 12, wherein the characteristic information comprises at least one of a received signal strength indicator, a link quality indicator, and a packet error rate.

14. An association method for data exchange that uses a introducer for association between a host and a device in a network system, the method comprising:

measuring a distance between the device and the introducer;
transmitting a signal for requesting a key to the device if the distance is smaller than a threshold;
receiving the key from the device;
measuring a distance between the host and the introducer; and
transmitting to the host the key for making the host transmit a connection context to the device if the distance between the host and the introducer is smaller than a threshold.

15. The method of claim 14, further comprising displaying a user's selection of whether to request the association if the distance between the device and the introducer is smaller than the threshold.

16. The method of claim 15, wherein the signal requesting the key is transmitted if a signal requesting the association is input.

17. The method of claim 14, further comprising displaying a user's selection of whether to request the association if the distance between the host and the introducer is smaller than the threshold.

18. The method of claim 17, wherein in the operation of transmitting the key to the host, the key is transmitted to the host if the signal requesting the association is input.

**19.** The method of claim 14, wherein the key is a key required for transferring secret information, and is a fixed symmetric key or a public key.

**20.** The method of claim 14, wherein the distances are measured using characteristic information of a wireless signal.

**21.** The method of claim 20, wherein the characteristic information comprises at least one of a received signal strength indicator, a link quality indicator, and a packet error rate.

**22.** The method of claim 14, wherein the operation of measuring a distance between the device and the introducer is made by at least one of the introducer and the device.

**23.** The method of claim 14, wherein the operation of measuring a distance between the host and the introducer is made by at least one of the host and the introducer.

**24.** The method of claim 14, wherein the introducer is a mobile phone.

**25.** An introducer used for association between a host and a device in a network system, the introducer comprising:

a measurement unit which measures a distance between the device and the introducer and a distance between the host and the introducer; and
a transmitting and receiving unit which transmits a signal requesting a key to the device and receives the key from the device if the distance between the device and the introducer is smaller than a threshold, and transmits the key to the host if the distance between the host and the introducer is smaller than the threshold.

**26.** The introducer of claim 25, further comprising a display unit which displays a user's selection of whether to request the association if the distance between the device and the introducer is smaller than the threshold.

**27.** The introducer of claim 26, wherein the signal requesting the key is transmitted if a signal requesting the association is input.

**28.** The introducer of claim 25, further comprising a display unit which displays a user's selection of whether to request the association if the distance between the host and the introducer is smaller than the threshold.

**29.** The introducer of claim 28, wherein the transmitting and receiving unit transmits the key to the host if the signal requesting the association is input.

**30.** The introducer of claim 25, wherein the key is a key required for transferring secret information and is a fixed symmetric key or a public key.

**31.** The introducer of claim 25, wherein the measurement unit measures the distances using characteristic information of a wireless signal.

**32.** The introducer of claim 31, wherein the characteristic information comprises at least one of a received signal strength indicator, a link quality indicator, and a packet error rate.

**33.** The introducer of claim 25, wherein the measurement unit operates if an operation start signal is input.

**34.** A network system comprising:

a device;
a host; and
an introducer which measures a distance between the device and the introducer, transmits a signal requesting a key to the device if the distance between the device and the introducer is smaller than a threshold, measures a distance between the host and the introducer, and transmits the key to the host if the distance between the host and the introducer is smaller than the threshold,
wherein the device transmits the key if the signal requesting the key is received from the introducer, and
wherein the host transmits a connection context to the introducer if the key is received from the introducer.

**35.** The network system of claim 34, wherein the introducer displays a user's selection of whether to request the association if the distance between the device and the introducer is smaller than the threshold.

**36.** The network system of claim 35, wherein the introducer transmits the signal requesting the key to the device if a signal requesting the association is input.

**37.** The network system of claim 34, wherein the introducer displays a user's selection of whether to request the association if the distance between the host and the introducer is smaller than the threshold.

**38.** The network system of claim 37, wherein the introducer transmits the key to the host if the signal requesting the association is input.

**39.** The network system of claim 34, wherein the key is a key required for transferring secret information, and is a fixed symmetric key or a public key.

**40.** The network system of claim 34, wherein the introducer measures the distances using characteristic information of a wireless signal.

**41.** The network system of claim 40, wherein the characteristic information comprises at least one of a received signal strength indicator, a link quality indicator, and a packet error rate.

**42.** The network system of claim 34, wherein the introducer is a mobile phone.

FIG. 1

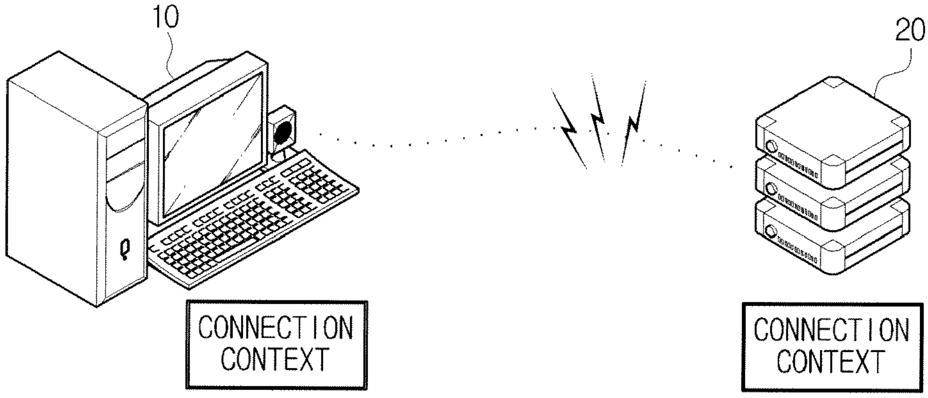
10
20
CONNECTION CONTEXT
CONNECTION CONTEXT

FIG. 2

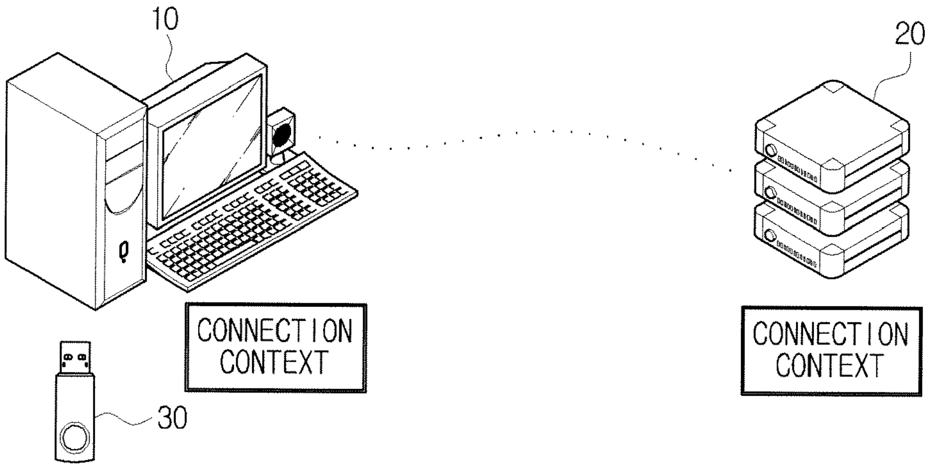
10
20
CONNECTION CONTEXT
CONNECTION CONTEXT
30

FIG. 3A

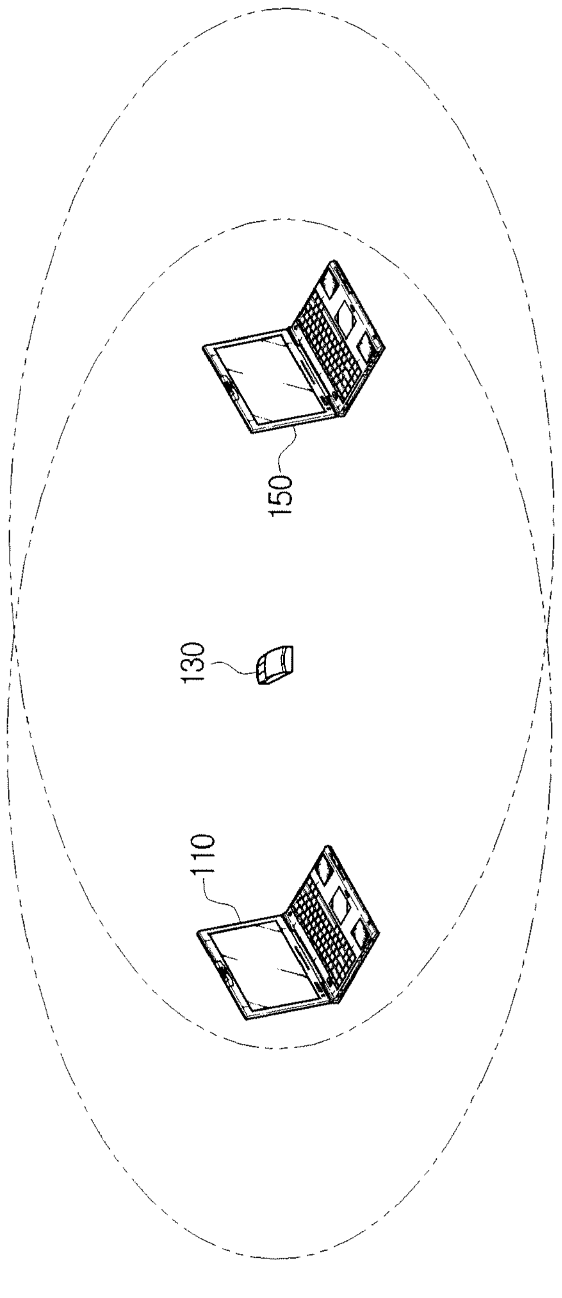

FIG. 3B

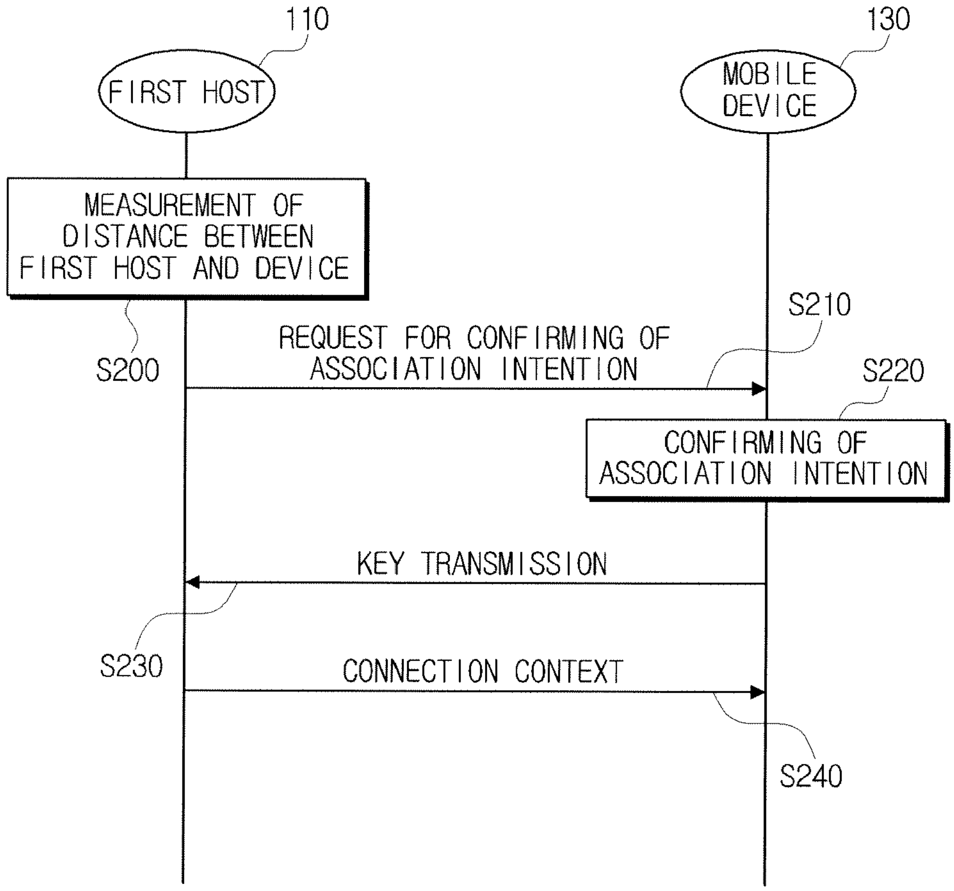
110
FIRST HOST
130
MOBILE DEVICE
MEASUREMENT OF DISTANCE BETWEEN FIRST HOST AND DEVICE
S200
REQUEST FOR CONFIRMING OF ASSOCIATION INTENTION
S210
S220
CONFIRMING OF ASSOCIATION INTENTION
KEY TRANSMISSION
S230
CONNECTION CONTEXT
S240

FIG. 4

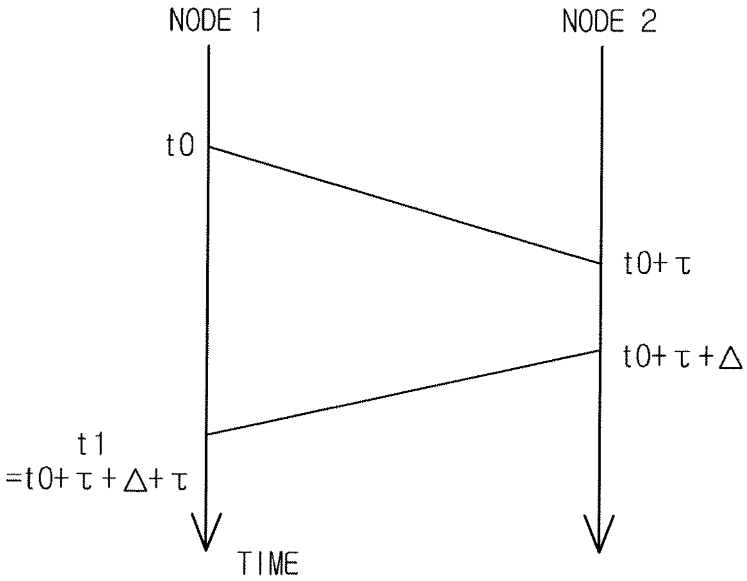

FIG. 5A

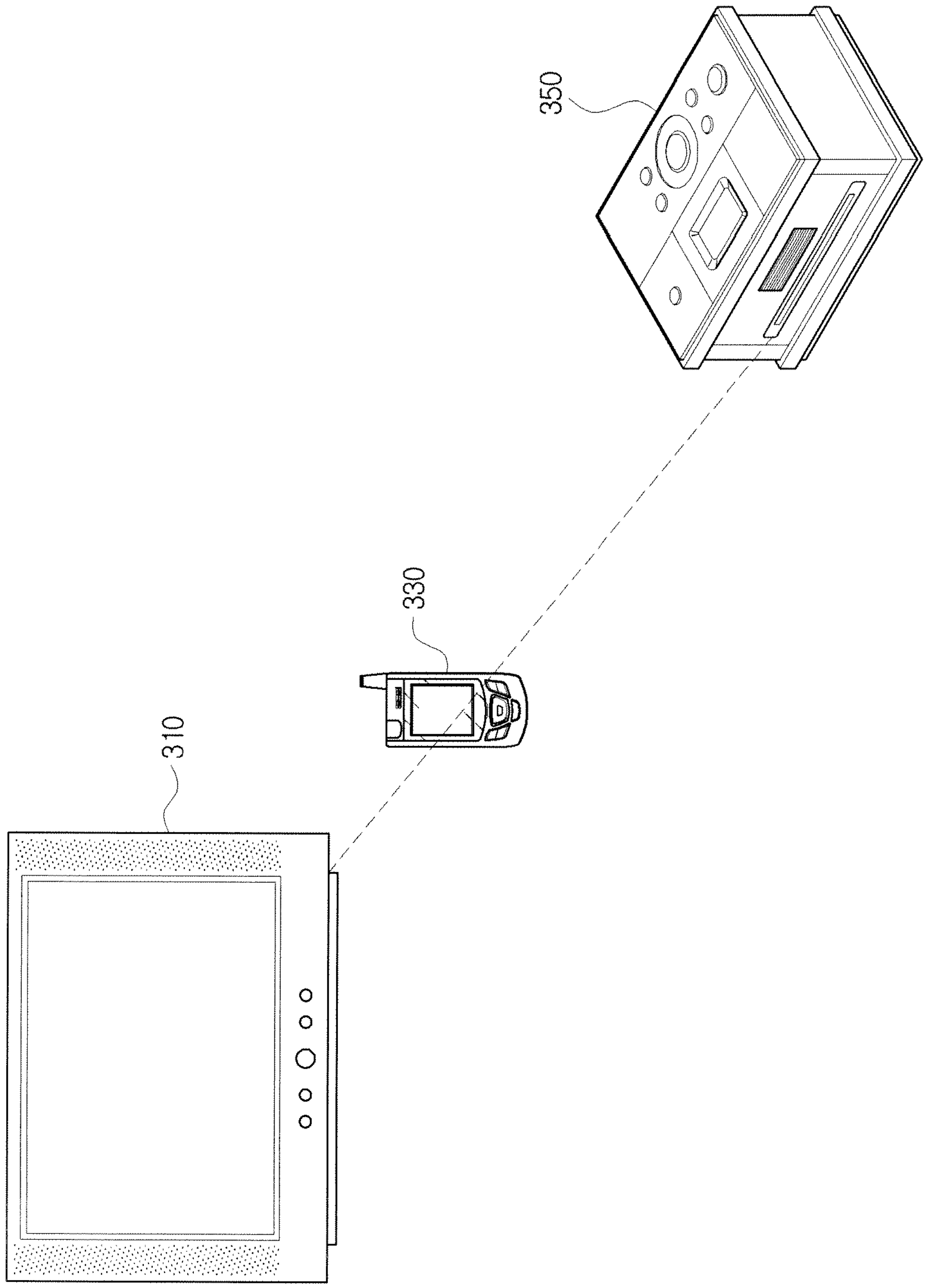

FIG. 5B

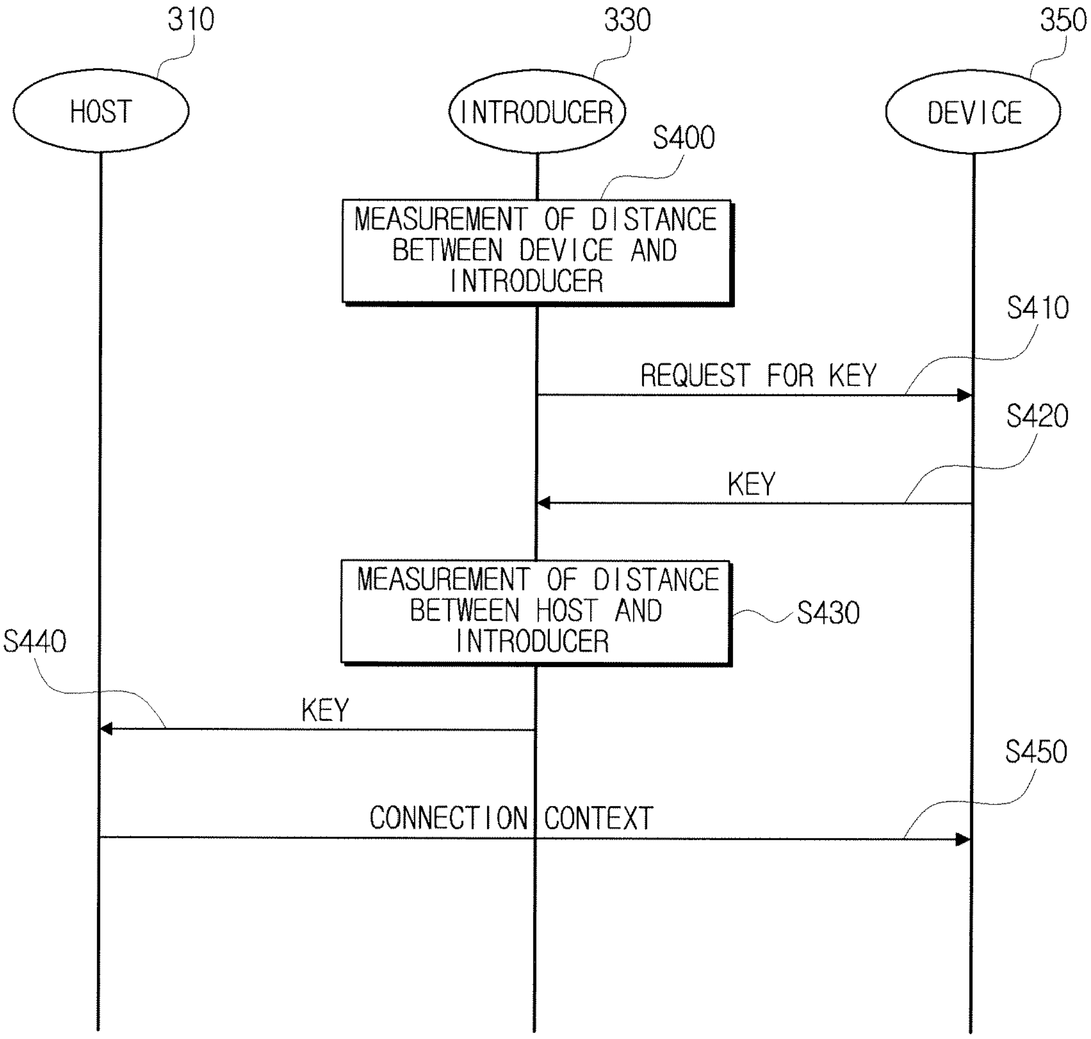
310
330
350
HOST
INTRODUCER
DEVICE
S400
MEASUREMENT OF DISTANCE BETWEEN DEVICE AND INTRODUCER
S410
REQUEST FOR KEY
S420
KEY
MEASUREMENT OF DISTANCE BETWEEN HOST AND INTRODUCER
S430
S440
KEY
S450
CONNECTION CONTEXT

FIG. 6

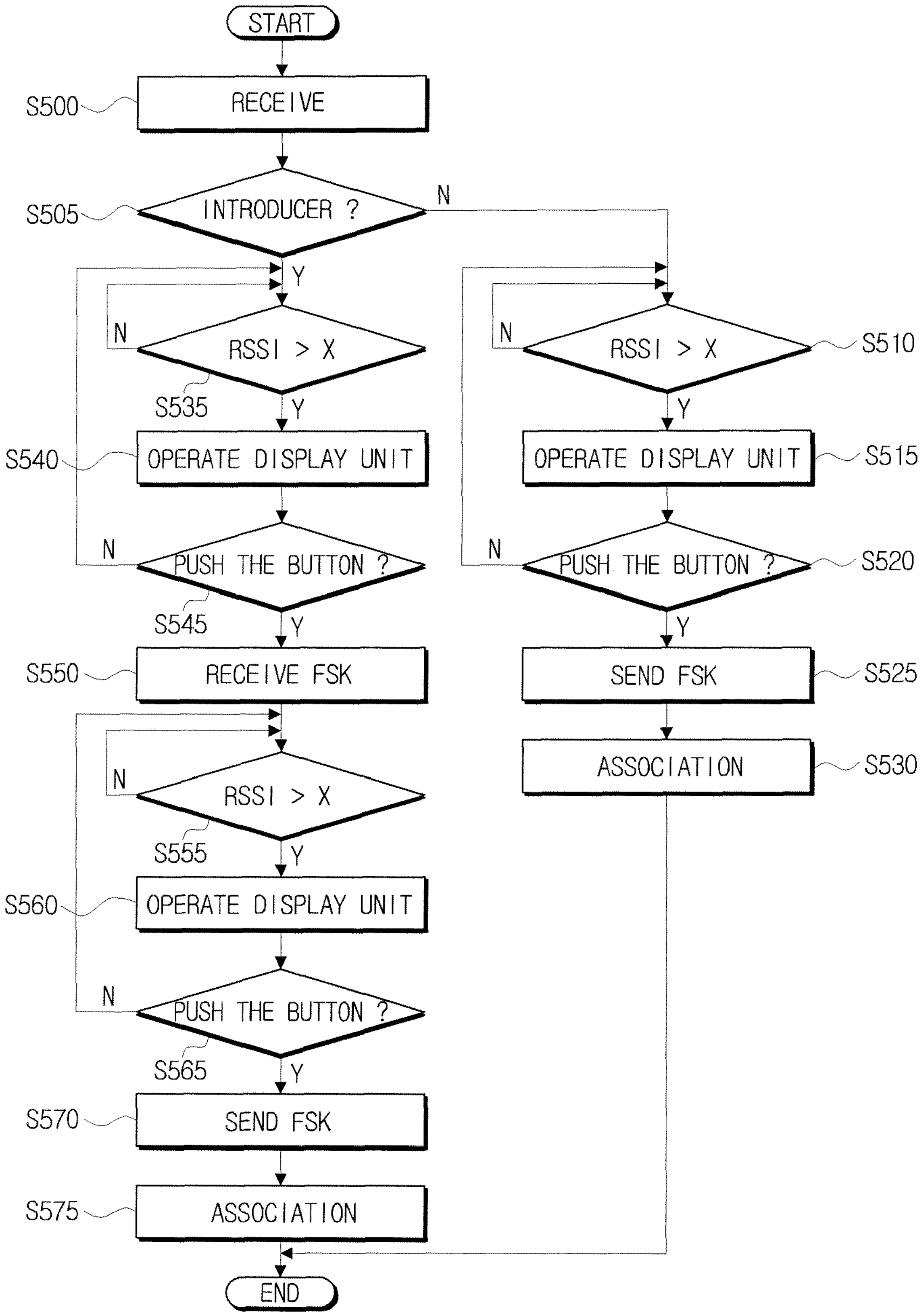
START
S500
RECEIVE
S505
INTRODUCER ?
N
Y
N
RSSI > X
S535
Y
S540
OPERATE DISPLAY UNIT
N
PUSH THE BUTTON ?
S545
Y
S550
RECEIVE FSK
N
RSSI > X
S555
Y
S560
OPERATE DISPLAY UNIT
N
PUSH THE BUTTON ?
S565
Y
S570
SEND FSK
S575
ASSOCIATION
END
N
RSSI > X
S510
Y
OPERATE DISPLAY UNIT
S515
N
PUSH THE BUTTON ?
S520
Y
SEND FSK
S525
ASSOCIATION
S530